# EUROPEAN PATENT SPECIFICATION

(11) **EP 2 740 626 B1**
(45) Date of publication and mention of the grant of the patent: **11.01.2017**
(21) Application number: 12874928.0
(22) Date of filing: 09.10.2012
(51) Int. Cl.: B60K 15/04, B60K 15/035

(54) **INLET DEVICE FOR THE FUEL FILLER OPENING OF MOTOR VEHICLES**
AUSGABEVORRICHTUNG FÜR BETANKUNGSSTUTZEN VON KRAFTFAHRZEUGEN
DISPOSITIF D'ENTRÉE POUR LA TRAPPE DE REMPLISSAGE DE VÉHICULES À MOTEUR

(43) Date of publication of application: 11.06.2014
(73) Proprietor: Cie Automotive, S.A., 48009 Bilbano (Vizcaya) (ES)
(72) Inventor: LARRUCEA DE LA RICA, Francisco, 48009 Bilbao (Vizcaya) (ES); GABIOLA IDOYAGA, Gotzon, 48009 Bilbao (Vizcaya) (ES); URIZAR NUÑEZ, Christopher, 48009 Bilbao (Vizcaya) (ES)
(74) Representative: Carpintero Lopez, Francisco
(86) International application number: PCT/ES2012/070699
(87) International publication number: WO 2014/057141

(56) References cited:
- EP-A1- 0 657 317
- WO-A1-2012/049836
- WO-A1-2012/049836
- DE-A1-102009 047 004
- FR-A1- 2 753 138
- JP-A- 2010 030 542
- JP-A- 2010 030 543
- US-A- 2 145 758
- US-A1- 2008 237 231
- US-A1- 2010 218 849
- US-A1- 2010 218 849
- US-B1- 6 968 874

## Description

### Object of the Invention

The present invention belongs to the automobile sector, and more specifically to arranging and putting together assemblies relating to fuel supply.

The main object of the present invention is a delivery device for the fuel filler neck of motor vehicles that stands out mainly due to its great structural simplicity, reducing the number of components to a minimum, and as a result, allowing substantially lowering the manufacturing, processing and assembly costs, constituting a safer, more robust and reliable device with respect to current fuel filler systems.

### Background of the Invention

Today, to fill up motor vehicles with fuel, said motor vehicles generally have a small hinged and/or articulated door arranged on their outer surface, which provides access to an internal cavity. Said cavity houses an internal closure cap communicating directly with the fuel tank of the vehicle. Therefore, a user who wants to fill his/her vehicle with fuel must perform the following steps: 1) open the articulated outer door; 2) unscrew and remove the internal closure cap; and 3) insert the nozzle (or metal nosepiece) of the gas pump hose into the fuel filler neck communicating directly with the tank of the vehicle.

This basic system to fill vehicles with fuel has the main drawback that the user must manipulate and interact with the internal closure cap to unscrew it, remove it and screw it back on, which can give rise to the case in which said closure cap remains in the open position even when the outer cover has been closed. As a result, an incorrect handling by the person filling the fuel can give rise to an uncontrolled fuel leak from the fuel filler neck while the vehicle is in motion, further causing a harmful and contaminating leakage of fuel vapors into the atmosphere.

Nevertheless, different vehicle fuel supply systems focusing on achieving various objectives are known today: systems that prevent fuel theft; systems that assure safe closure of the internal closure cap; systems suitable for preventing the delivery of the wrong fuel, either gasoline or diesel fuel, for those situations in which the user did not choose the correct gas pump hose and introduces the fuel that is unsuitable for his/her vehicle, which can have terrible consequences for the engine, etc.

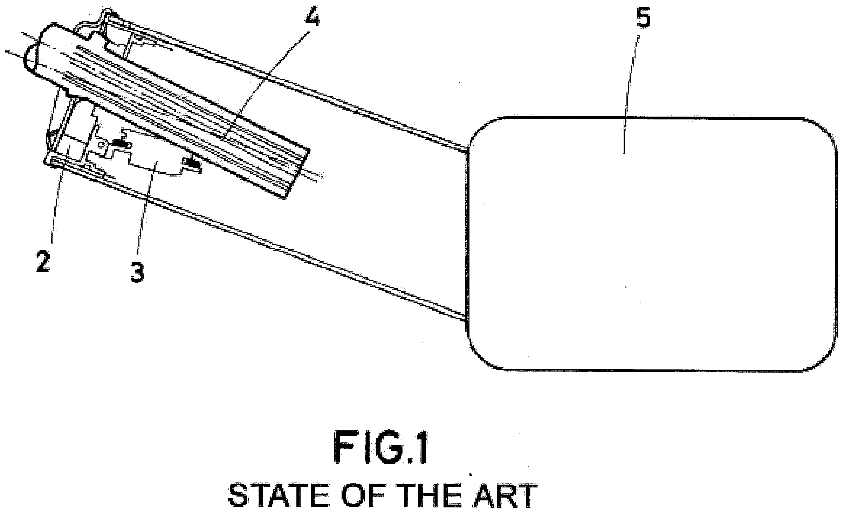

More specifically, the fuel filler system most widely known as a capless fuel system, whereby the user can fill his/her vehicle with fuel without needing to manipulate any internal closure cap which provides access to the tank, is known in the current state of the art. To that end, the user only needs to push on an existing cover with the actual nozzle of the hose, said hinged cover being able to swing towards the inside of the tank, as shown in the schematic view of Figure 1.

The document US 2010/0218849 describes a device according to the preamble of claim 1.

Examples of these capless systems are described in the following United States patent applications: US2011/0079322 A1: "Fuel filler system"; US2011/0108563 A1: "Neck end for a filler neck"; and US6945290 B1: "Check valve for use in filler tube vapor recirculation system and method of making same". For its part, the international patent application WO2012/049836 A1 relates to a fuel tank opening-closing device having a flapper valve adapted to open through insertion force of the fueling nozzle to allow filling of the fuel tank. However, said current capless systems for filling vehicles with fuel have the following drawbacks, among others:
- Structural complexity, being formed by a large number of parts and components.
- Since they have a large number of moving elements and parts (springs), there are more problems derived from backlashes and/or worn parts, increasing the possibilities of failure (the design is less robust).
- The two preceding points directly result in higher manufacturing, processing and assembly costs, as well as an increase in repair and maintenance costs.

### Description of the Invention

The present invention solves the aforementioned drawbacks by providing a delivery device for the fuel filler neck of motor vehicles which stands out mainly due to its structural simplicity, minimizing the number of parts and components forming it, allowing substantially reducing the manufacturing, processing and assembly costs, constituting a safer, more robust and reliable device with respect to current fuel filler systems.

More specifically, the fuel filler device object of the invention is of the type which do not incorporate an internal closure cap (i.e., capless), basically comprising a support part having a hinged cover swingable between a closed position in which said cover is locked through locking/unlocking means, and an open position operable by means of the actual nozzle of the fuel filler hose, in which the cover is pushed on and swings towards the inside of the tank of the vehicle, allowing the delivery of fuel therein.

Therefore, the device of the present invention stands out mainly because the locking/unlocking means comprise a flexible fork to which there are integrally attached at least two flanges suitable in size so that upon being pressed by the nozzle of the fuel filler hose, they perform a simultaneous side movement towards the outer perimeter of the support part, releasing the cover from the locking/unlocking means.

The flexible fork is preferably embedded in the support part and comprises two side branches and an intermediate section oriented towards the center of the support part and joining both side branches. Said fork acts as a spring, such that after undergoing deformation to unlock the cover and release it from the fixing means, the flanges return to their initial closed position locking the cover again.

The flanges in turn preferably comprise inclined and curved sections in their upper area which are suitable in size for receiving the nozzle of the fuel filler hose.

Furthermore, it has been envisaged that said flanges additionally comprise fixing means on which the cover is locked in the closed position, and where the actual movement of inserting the nozzle of the fuel filler hose causes the flanges to move laterally towards the outer perimeter of the support part, thus releasing the cover from the fixing means, and as a result, allowing said cover to swing towards the open position where the fuel can be delivered freely to the tank of the vehicle. More specifically, said fixing means comprise recesses made in the lower area of the flanges, and in which the cover is inserted in the closed position.

Likewise, it must be indicated that the fuel filler device described herein has been envisaged to be of application both for gasoline-fueled vehicles and for gas oil-or diesel-fueled vehicles, minimally varying the dimensions of the support part.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and nonlimiting character:
Figure 1 shows a schematic view where the operating mechanism of the capless fuel filler system already known in the current state of the art is seen.
Figure 2 shows a perspective view of the fuel filler device object of the invention.
Figure 3 shows a plan view of the fuel filler device according to a first preferred embodiment, where the fork has three flanges.
Figure 4 shows a sectioned view of Figure 3 according to axis A-A, where the recess of the third flange is seen.
Figure 5 shows a sectioned view of Figure 3 according to axis B-B, in which the recesses of the two side flanges are seen.
Figure 6 shows a sectioned view of Figure 3, where the nozzle of the fuel filler hose is seen about to contact the hinged cover which is initially in a closed and locked position.
Figure 7 shows another sectioned view of Figure 3, where it is seen that the nozzle of the hose has moved the flange laterally towards the outside, releasing the cover, and allowing the cover to swing towards the inside.
Figure 8 shows a plan view of the fuel filler device according to a second preferred embodiment, where the flexible fork has only two flanges.

### Preferred Embodiment of the Invention

Several preferred embodiments are described below referring to the aforementioned drawings without limiting or reducing the scope of protection of the present invention.

The fuel filler device (1) object of the invention is of the type comprising a support part (2) having a hinged cover (3) that can swing between a closed position in which said cover (3) is locked through locking/unlocking means, and an open position operable through the actual nozzle (4) of the fuel filler hose, in which the cover (3) is pushed on and swings towards the inside of the tank (5) of the vehicle, allowing the delivery of fuel therein, as depicted in said Figure 1.

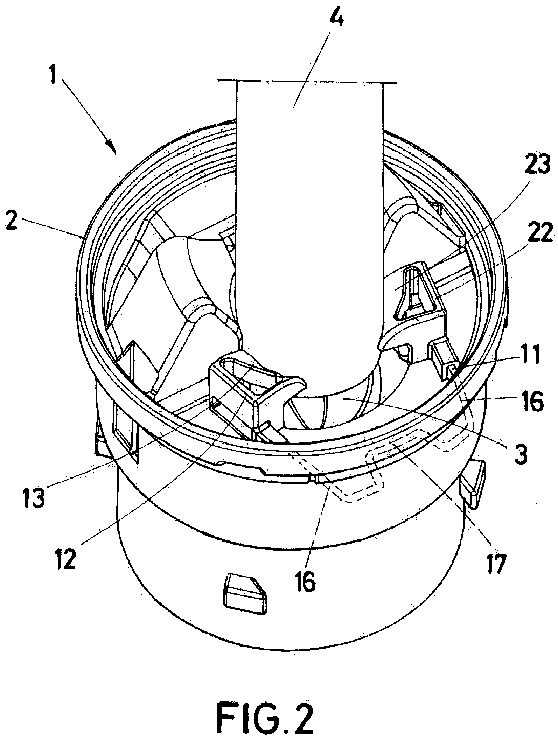

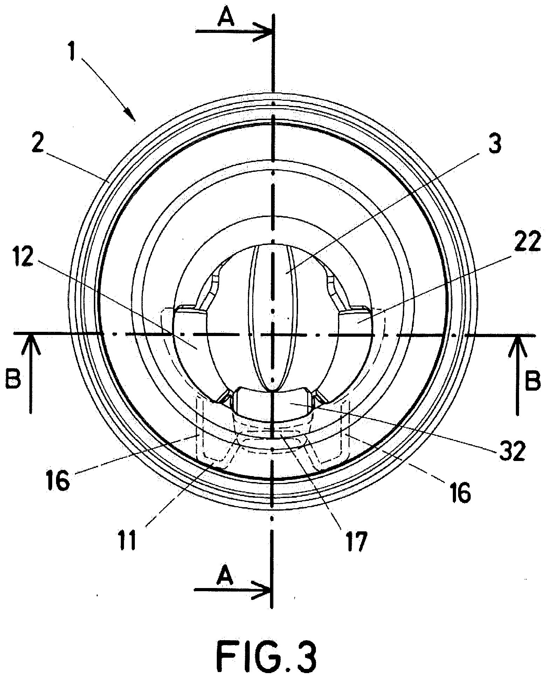

More particularly, as seen in Figures 2 and 3, the locking/unlocking means comprise a flexible fork (11) embedded in the support part (2) and which in the present embodiment shows a U-shaped configuration, said flexible fork (11) comprising two side branches (16) and an intermediate section (17) oriented towards the center of the support part (2) and joining both side branches (16).

According to a first preferred embodiment shown in Figures 3 to 7, the flexible fork (11) is a metal fork and comprises three flanges (12, 22, 32) integral with said flexible fork (11), said flanges (12, 22, 32) being provided with respective inclined and curved sections (13, 23, 33) suitable in size for receiving the nozzle (4) of the fuel filler hose. Therefore, as can be seen in Figure 3, the side flanges (12, 22) are arranged at the ends of the side branches (16) of the flexible fork (11), whereas the central flange (32) is located in the intermediate section (17) thereof. At this point it must be indicated that the orientation of the intermediate section (17) towards the center of the support part (2), see Figure 3, allows suitably positioning the central flange (32) for interaction with the hinged cover (3), while at the same time keeping the flexible fork (11) embedded in a secure and stable manner in the support part (2).

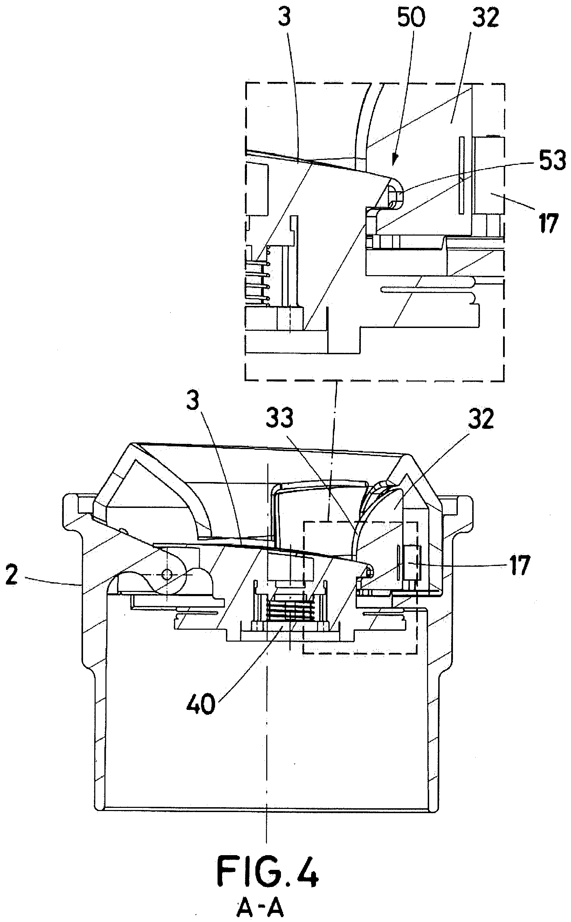

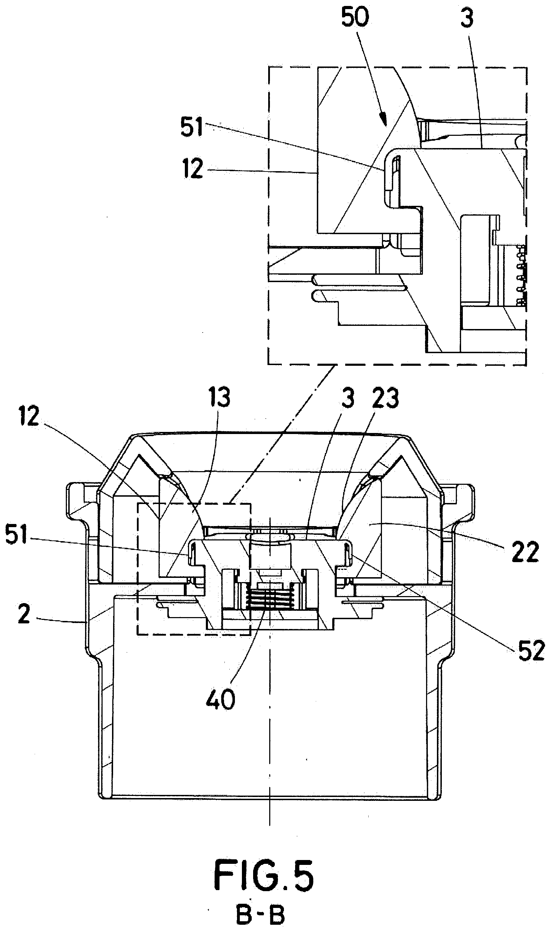

On the other hand, it can be seen in Figures 4 and 5 that the flanges (12, 22, 32) have fixing means (50) for locking the cover (3) in a closed position. More specifically, said fixing means (50) comprise small recesses (51, 52, 53) made in the lower area of the inclined and curved sections (13, 23, 33) of the flanges (12, 22, 32) which allow locking and fixing the cover (3) by its perimetral edge.

Therefore, the actual insertion of the nozzle (4) of the fuel filler hose by the user pushes the flanges (12, 22, 32) outwards where, as a result of the elastic nature of the flexible fork (11) and the inclined and curved sections (13, 23, 33) mentioned above, said flanges (12, 22, 32) move laterally towards the outside of the support part (2), gradually releasing the cover (3), the perimetral edge of which was initially inserted in the recesses (51, 52, 53), finally allowing the cover (3) to swing towards the open position where the fuel can freely access the inside of the tank (5) of the vehicle.

Figure 4 in turn depicts a sectioned view of Figure 3 according to longitudinal axis A-A, where it can be seen that the recess (53) of the central flange (32) has a semicircular configuration and a diameter smaller than the recesses (51, 52) of the side flanges (12, 22) shown in Figure 5, in which a sectioned view of Figure 3 according to transverse axis B-B is seen, these aforementioned recesses (51, 52) having a quadrangular configuration and a section greater than the recess (53) of the central flange (32) for a more secure and reliable side locking of the cover (3), and a more uniform distribution of the stresses caused by external agents pushing on the cover (3), further favoring greater cover stability and securing in the closed position.

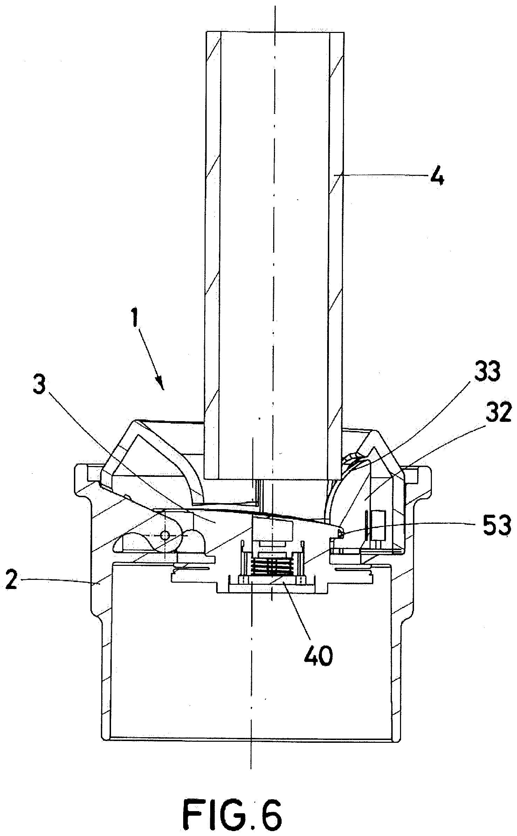

Figure 6 shows a sectioned view of the fuel filler device (1) according to the first embodiment having three flanges (12, 22, 32), where the nozzle (4) of the fuel filler hose is seen just before it contacts the hinged cover (3), which is in a closed position.

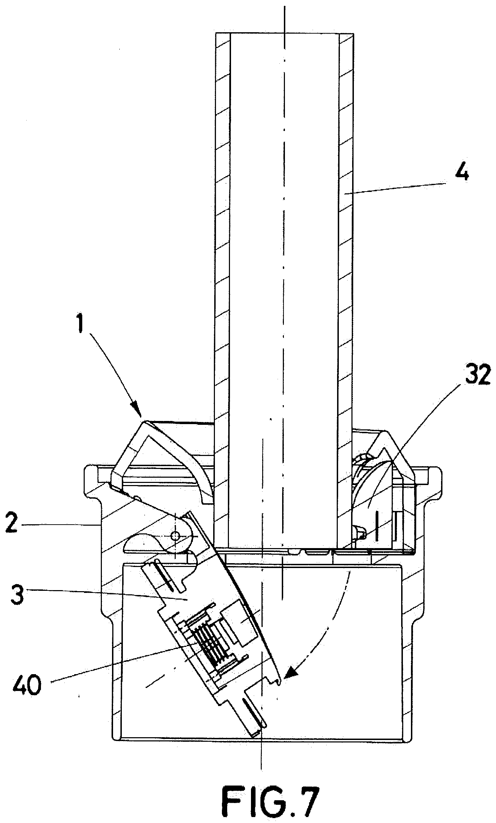

Figure 7 in turn shows another sectioned view similar to Figure 6, where the nozzle (4) of the fuel filler hose is seen pushing on and partially opening the hinged cover (3), once the flanges (12, 22, 32) have already moved laterally towards the outside, and the cover (3) has been released from the recesses (51, 52, 53), said Figure 7 showing only the central flange (32) and its corresponding recess (53) as the view is sectioned according to the longitudinal axis of the cover (3).

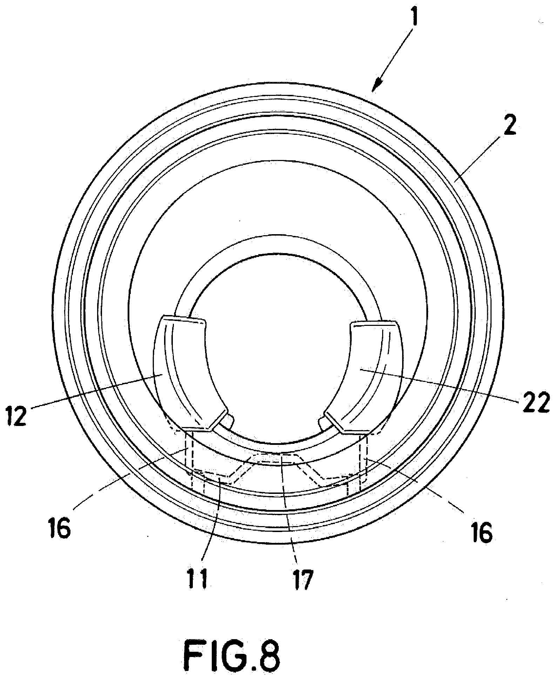

On the other hand, according to a second preferred embodiment shown in Figures 2 and 8, the flexible fork (11) is also a metal fork but comprises only two flanges (12, 22) located at the ends of its side branches (16), as seen in Figure 8. Likewise, said flanges (12, 22) show inclined and curved sections (13, 23), by way of facing wedged ramps, which are also intended for receiving the nozzle (4) of the fuel filler hose. This second embodiment constitutes both a more economical and more robust solution than the first embodiment since it requires fewer raw materials and eliminates possible backlashes.

Said Figure 2 shows a perspective view of the fuel filler device (1) object of the invention, where the two flanges (12, 22) of the flexible fork (11) are moving gradually towards the outer perimeter of the support part (2) in order to allow the nozzle (4) of the fuel filler hose to pass. Once again, this outward movement of the flanges (12, 22) is what allows unlocking and releasing the cover (3) from the recesses (51, 52) shown in Figure 5, finally allowing the cover to swing due to the push of said nozzle (4).

At this point it must be indicated that for the two preferred embodiments described above, the first and second embodiments, the flexible fork (11) has been envisaged to be made of steel having a high elastic limit, which offers high fatigue strength, high ductility and good forming and welding capabilities. In turn, the support part (2) and the flanges (12, 22, 32) are preferably manufactured in a material selected from: polyoxymethylene (POM), and glass fiber-reinforced polyamide (PA+GF), which have proven to offer better performance and better balance between:
- Flexibility: they are materials that are flexible enough so as to withstand deformations without suffering damages, prolonging their service life.
- Hardness: they allow the contact of the nozzle of the hose without becoming damaged.
- Structural strength: they withstand loads and stresses caused by the fuel filler gun, internal pressures of the tank, assembly stresses, etc.
- Resistance to chemical etchings: they withstand continuous contact with aggressive fluids, such as gasoline and diesel fuel.
- Precision: they allow manufacturing parts with high precision during the injection molding process.
- Cost: they are economically viable materials.

Finally, according to a third preferred embodiment which is not depicted, the support part (2), the flexible fork (11) and the flanges (12, 22, 32) constitute a single monoblock structure made of plastic material. This third embodiment is of special interest for those cases in which the expected number of fuel fillings to be performed is low, or for mid-range or low-end vehicles, which allows obtaining said monoblock structure by means of a single injection process, thus significantly reducing the total processing and preparation costs for the delivery device (1) described herein.

In contrast, for those applications that require maximum strengths, it has been envisaged that the flanges (12, 22, 32) constitute independent parts and are manufactured in very hard metal or plastic materials.

Finally, it must be indicated that for any of the three preferred embodiments described above, it has been envisaged that the cover (3) can additionally comprise pressure controlling means which allow regulating and controlling the pressure existing inside the tank (5) of the vehicle, and which in the present examples comprise a valve (40) integrated in the cover (3) itself, as shown in Figures 4 to 7, which allows pressure to exit when there is excess pressure in the tank (5), and allows pressure to enter when it is less than atmospheric pressure, said valve (40) being able to be a one-way or two-way valve.

## Claims

1. Delivery device (1) for the fuel filler neck of motor vehicles, comprising a support part (2) having a hinged cover (3) swingable between a closed position in which said cover (3) is locked through locking/unlocking means, and an open position operable by means of the actual nozzle (4) of the fuel filler hose, wherein the locking/unlocking means comprise a flexible fork (11) to which there are integrally attached at least two flanges (12, 22) suitable in size so that upon being pressed by the nozzle (4) of the fuel filler hose they perform a simultaneous side movement towards the outer perimeter of the support part (2), releasing the cover (3) from the locking/unlocking means, whereby
- the flanges (12, 22) additionally comprise fixing means (50) on which the cover (3) is locked in the closed position, said fixing means (50) comprising recesses (51, 52) made in the lower area of the flanges (12, 22) and in which the cover (3) is inserted in the closed position; **characterized in that**
- the flexible fork (11) comprises two side branches (16) and an intermediate section (17) oriented towards the center of the support part (2) and joining both side branches (16).

2. Delivery device (1) for the fuel filler neck of motor vehicles according to claim 1, **characterized in that** the flexible fork (11) comprises three flanges (12, 22, 32), where the side flanges (12, 22) are arranged at the ends of the side branches (16) of the flexible fork (11), whereas the central flange (32) is located in the intermediate section (17) thereof.

3. Delivery device (1) for the fuel filler neck of motor vehicles according to any one of the preceding claims, **characterized in that** the flexible fork (11) is embedded in the support part (2).

4. Delivery device (1) for the fuel filler neck of motor vehicles according to claim 1, **characterized in that** the flanges (12, 22) comprise in the top portion inclined and curved sections (13, 23) suitable in size for receiving the nozzle (4) of the fuel filler hose.

5. Delivery device (1) for the fuel filler neck of motor vehicles according to claim 1, **characterized in that** the flexible fork (11) is a metal fork, whereas the support part (2) and the flexible flanges (12, 22) are manufactured in a material selected from:
- polyoxymethylene (POM), and
- glass fiber-reinforced polyamide (PA+GF).

6. Delivery device (1) for the fuel filler neck of motor vehicles according to claim 5, **characterized in that** the flexible fork (11) is made of steel having a high elastic limit.

7. Delivery device (1) for the fuel filler neck of motor vehicles according to claim 1, **characterized in that** the support part (2), the flexible fork (11) and the flanges (12, 22) constitute a single monoblock structure made of plastic material.

8. Delivery device (1) for the fuel filler neck of motor vehicles according to any one of the preceding claims, **characterized in that** the cover (3) additionally comprises pressure controlling means which allow regulating and controlling the pressure existing inside the tank (5) of the vehicle.

9. Delivery device (1) for the fuel filler neck of motor vehicles according to claim 8, **characterized in that** the pressure controlling means comprise a valve (40) integrated in the cover (3) itself, suitable for allowing pressure to exit when there is excess pressure in the tank (5), and allowing pressure to enter when it is less than atmospheric pressure.

10. Delivery device (1) for the fuel filler neck of motor vehicles according to claim 2, **characterized in that** the central flange (32) comprises a recess (53) having a semicircular configuration and a diameter smaller that the recesses (51, 52) of the side flanges (12, 22), whereas said recesses (51, 52) of the side flanges (12, 22) have a quadrangular configuration and a section greater than the recess (53) of the central flange (32).

## Patentansprüche

1. Zuführvorrichtung für den Benzineinfüllstutzen von Kraftfahrzeugen aufweisend ein Halteelement (2) mit einem kappbaren Deckel (3), der von einer geschlossenen Position, in welcher der Deckel (3) durch Verriegelungs-/Entriegelungsmittel verriegelt ist, in eine geöffnete Position, mittels dem jeweiligen Einfüllstutzen des Benzineinfüllschlauches schwenkbar ist, wobei die Verriegelungs-/Entriegelungsmittel ein flexibles Gabelstück (11) aufweisen, an dem integral befestigt sind:
- zumindest zwei Flansche (12, 22) in geeigneter Größe, so dass diese, druckbelastet durch den Einfüllstutzen (4) des Benzineinfüllstutzens, gleichzeitig eine Seitwärtsbewegung in Richtung des Außenumfangs des Halteelements (2) ausführen und den Deckel (3) von den Verriegelungs-/Entriegelungsmittel lösen, wobei
- die Flansche (12, 22) zusätzlich Befestigungsmittel (50) aufweisen, an denen der Deckel (3) in der geschlossenen Position verriegelt ist, wobei die Befestigungsmittel (50) Aussparungen (51, 52) aufweisen, die in den unteren Bereichen der Flansche (12, 22) eingebracht sind, und in welchen der Deckel (3) in der geschlossenen Position eingefügt ist; **dadurch gekennzeichnet, dass**
- das Gabelstück (11) zwei seitliche Schenkel (16) und einen Zwischenbereich (17) aufweist, der zur Mitte des Halteelements (2) gerichtet ist und die beiden seitlichen Schenkel (16) verbindet.

2. Zuführvorrichtung (1) für den Benzineinfüllstutzen eines Kraftfahrzeuges nach Anspruch 1, **dadurch gekennzeichnet, dass** das Gabelstück (11) drei Flansche (12, 22, 32) aufweist, wobei die seitlichen Flansche (12, 22) an den Enden der inneren Schenkel des flexiblen Gabelstücks angeordnet sind, und der mittlere Flansch (32) in dessen Zwischenbereich (17) angeordnet ist.

3. Zuführvorrichtung (1) für den Benzineinfüllstutzen von Kraftfahrzeugen nach einem der vorangegangenen Ansprüche, **dadurch gekennzeichnet, dass** das flexible Gabelstück (11) in das Halteelement (12) eingebettet ist.

4. Zuführvorrichtung (1) für den Benzineinfüllstutzen von Kraftfahrzeugen nach Anspruch 1, **dadurch gekennzeichnet, dass** die Flansche (12, 22) im oberen Bereich geneigte und gekrümmte Bereiche (13, 23) aufweisen, die geeignet groß sind, den Einfüllstutzen (4) des Benzineinfüllschlauches aufzunehmen.

5. Zuführvorrichtung (1) für den Benzineinfüllstutzen von Kraftfahrzeugen gemäß Anspruch 1, **dadurch gekennzeichnet, dass** das flexible Gabelstück (11) ein metallisches Gabelstück ist, wobei das Halteelement (2) und die flexiblen Flansche (12, 22) aus einem Material hergestellt sind, welches ausgewählt wird von:
- Polyoxymethylen (POM)
- Glasfaserverstärtes Polyamid (PA+GF)

6. Zuführvorrichtung (1) für den Benzineinfüllstutzen von Kraftfahrzeugen nach Anspruch 5, **dadurch gekennzeichnet, dass** das flexible Gabelstück (11) aus Stahl hergestellt ist, welcher eine hohe Elastizitätsgrenze aufweist.

7. Zuführvorrichtung (1) für den Benzineinfüllstutzen von Kraftfahrzeugen nach Anspruch 1, **dadurch gekennzeichnet, dass** das Halteelement (2), das flexible Gabelelement (11) und die Flansche (12, 22) eine singuläre Monoblockstruktur ausbilden, die aus Plastikmaterial hergestellt ist.

8. Zuführvorrichtung (1) für den Benzineinfüllstutzen von Kraftfahrzeugen nach einem der vorangegangenen Ansprüche, **dadurch gekennzeichnet, dass** der Deckel (3) zusätzlich Drucksteuermittel aufweist, die es erlauben, den Druck der innerhalb des Tanks (5) des Fahrzeuges herrscht, zu regulieren und zu steuern.

9. Zuführvorrichtung (1) für den Benzineinfüllstutzen von Kraftfahrzeugen gemäß Anspruch 8, **dadurch gekennzeichnet, dass** die Drucksteuermittel ein Ventil (40) aufweisen, das in den Deckel (3) selbst integriert ist und geeignet ist, Druck abzulassen, wenn ein Überdruck im Tank (5) vorhanden ist, und Druckeintritt ermöglicht, wenn dieser geringer ist als der atmosphärischer Druck.

10. Zuführvorrichtung (1) für den Benzineinfüllstutzen von Kraftfahrzeugen nach Anspruch 2, **dadurch gekennzeichnet, dass** der zentrale Flansch (32) eine Aussparung (53) aufweist, die eine halbkreisförmige Ausführung zeigt und einen Durchmesser kleiner als die Aussparungen (51, 52) der seitlichen Flansche (22, 23) aufweist, wobei die Aussparungen (51, 52) der seitlichen Flansche (12, 22) viereckig ausgebildet sind und einen Bereich aufweisen, der größer ist als die Ausnehmung (53) des zentralen Flansches (32).

## Revendications

1. Dispositif de fourniture (1) pour le goulot de remplissage de carburant de véhicules motorisés, comprenant une partie de support (2) présentant un couvercle articulé (3) pouvant osciller entre une position fermée, dans laquelle ledit couvercle (3) est verrouillé par des moyens de verrouillage et déverrouillage, et une position ouverte actionnable à l'aide de la buse réelle (4) du tuyau de remplissage de carburant, dans lequel les moyens de verrouillage et déverrouillage comprennent une fourche flexible (11), à laquelle sont attachées intégralement au moins deux brides (12, 22) adaptées en taille de sorte que lors du pressage par la buse (4) du tuyau de remplissage de carburant, elles réalisent un mouvement latéral simultané vers le périmètre extérieur de la partie de support (2), libérant le couvercle (3) des moyens de verrouillage et déverrouillage, moyennant quoi
- les brides (12, 22) comprennent en outre des moyens de fixation (50), sur lesquels le couvercle (3) est verrouillé dans la position fermée, lesdits moyens de fixation (50) comprenant des évidements (51, 52) réalisés dans la zone inférieure des brides (12, 22) et dans lesquels le couvercle (3) est inséré dans la position fermée ; **caractérisé en ce que**
- la fourche flexible (11) comprend deux branches latérales (16) et une section intermédiaire (17) orientée vers le centre de la partie de support (2) et joignant les deux branches latérales (16).

2. Dispositif de fourniture (1) pour le goulot de remplissage de carburant de véhicules motorisés selon la revendication 1, **caractérisé en ce que** la fourche flexible (11) comprend trois brides (12, 22, 32) où les brides latérales (12, 22) sont agencées sur les extrémités des branches latérales (16) de la fourche flexible (11), alors que la bride centrale (32) est située dans la section intermédiaire (17) de celle-ci.

3. Dispositif de fourniture (1) pour le goulot de remplissage de carburant de véhicules motorisés selon l'une quelconque des revendications précédentes, **caractérisé en ce que** la fourche flexible (11) est intégrée dans la partie de support (2).

4. Dispositif de fourniture (1) pour le goulot de remplissage de carburant de véhicules motorisés selon la revendication 1, **caractérisé en ce que** les brides (12, 22) comprennent des sections inclinées et courbées (13, 23) dans la partie supérieure adaptées en taille pour recevoir la buse (4) du tuyau de remplissage de carburant.

5. Dispositif de fourniture (1) pour le goulot de remplissage de carburant de véhicules motorisés selon la revendication 1, **caractérisé en ce que** la fourche flexible (11) est une fourche métallique, alors que la partie de support (2) et les brides flexibles (12, 22) sont fabriquées en un matériau sélectionné parmi :
- polyoxyméthylène (POM) et
- polyamide renforcé de fibre de verre (PA+GF).

6. Dispositif de fourniture (1) pour le goulot de remplissage de carburant de véhicules motorisés selon la revendication 5, **caractérisé en ce que** la fourche flexible (11) est fabriquée en acier présentant une limite élastique élevée.

7. Dispositif de fourniture (1) pour le goulot de remplissage de carburant de véhicules motorisés selon la revendication 1, **caractérisé en ce que** la partie de support (2), la fourche flexible (11) et les brides (12, 22) constituent une seule structure monobloc réalisée en matériau plastique.

8. Dispositif de fourniture (1) pour le goulot de remplissage de carburant de véhicules motorisés selon l'une quelconque des revendications précédentes, **caractérisé en ce que** le couvercle (3) comprend en outre des moyens de contrôle de pression qui permettent la régulation et le contrôle de la pression existante dans le réservoir (5) du véhicule.

9. Dispositif de fourniture (1) pour le goulot de remplissage de carburant de véhicules motorisés selon la revendication 8, **caractérisé en ce que** les moyens de contrôle de pression comprennent une valve (40) intégrée dans le couvercle (3) lui-même, adaptée pour permettre à la pression de sortir lorsqu'il y a une pression en excès dans le réservoir (5), et permettre à la pression d'entrer lorsqu'elle est inférieure à la pression atmosphérique.

10. Dispositif de fourniture (1) pour le goulot de remplissage de carburant de véhicules motorisés selon la revendication 2, **caractérisé en ce que** la bride centrale (32) comprend un évidement (53) présentant une configuration semi-circulaire et un diamètre plus petit que les évidements (51, 52) des brides latérales (12, 22), alors que lesdits évidements (51, 52) des brides latérales (12, 22) ont une configuration quadrangulaire et une section plus grande que l'évidement (53) de la bride centrale (32).
